# EUROPEAN PATENT APPLICATION

(11) **EP 0 729 196 A1**
(43) Date of publication of application: **28.08.1996**
(21) Application number: 95830059.2
(22) Date of filing: 27.02.1995
(51) Int. Cl.: H01M 8/06

(54) **Fuel cell integrated with catalytic reactor producing hydrogen**

(71) Applicant: FINMECCANICA S.p.A. AZIENDA ANSALDO, I-16128 Genova (IT)
(72) Inventor: Caprile, Luciano, I-16142 Genova (IT); Casiglia, Mario, I-16132 Genova (IT); Pasquali, Claudio, I-16154 Genova (IT)
(74) Representative: Perani, Aurelio

(57) **Abstract**

Apparatus (1) for producing hydrogen, with high thermodynamic efficiency, for supply to a fuel cell (2) comprises a catalytic burner (60) for the combustion of a fuel mixture comprising the exhausted cathodic gases and the exhausted anodic gases of the fuel cell (2), connected to an internal heating circuit (33) of a catalytic reactor (30) wherein the reaction which produces the hydrogen takes place.

## Description

The present invention relates to an apparatus for producing hydrogen from a supply mixture comprising lower alkanes or lower alcohols in a catalytic reactor for anodic supply to a fuel cell, the catalytic reactor having an internal heating circuit.

As is known, the use of fuel cells for producing electrical energy directly by a chemical reaction is acquiring ever greater importance in the field of alternative energy sources since it causes little pollution.

One of the most suitable fuels for the anodic supply of these cells is hydrogen, the use of which can minimize harmful pollutant emissions.

Unfortunately, a significant problem connected with the use of hydrogen is its storage.

In fact, hydrogen is a gas which is particularly inflammable in contact with air. Moreover, its liquefaction presents considerable technical problems which make it expensive and its storage under pressure in cylinders or tanks is also dangerous and difficult.

There has therefore been a tendency to use lower alkanes and lower alcohols, which are chemical compounds with high hydrogen contents which can release the gas by chemical transformation at the moment of its use, inside a catalytic reactor in hydrogen-production apparatus of the type specified.

These compounds can easily be synthesized at reasonable cost if they are not present naturally and their storage presents fewer technical difficulties and less risk.

In order to take place, however, the chemical transformation requires an input of energy in the form of heat, rendering the use of these compounds thermodynamically inefficient and therefore disadvantageous.

Moreover, since fuel cells are used in restricted environments such as in the field of land or sea transport, it is necessary for the apparatus for producing hydrogen to be compact and light.

The technical problem upon which the present invention is based consists of providing an apparatus for producing hydrogen which overcomes the problem mentioned with reference to the prior art and, at the same time, satisfies the aforementioned requirements.

This problem is solved by an apparatus of the type specified as defined in the characterizing part of the appended Claim 1.

The main advantage of the apparatus for the production of hydrogen according to the invention is its high thermodynamic efficiency.

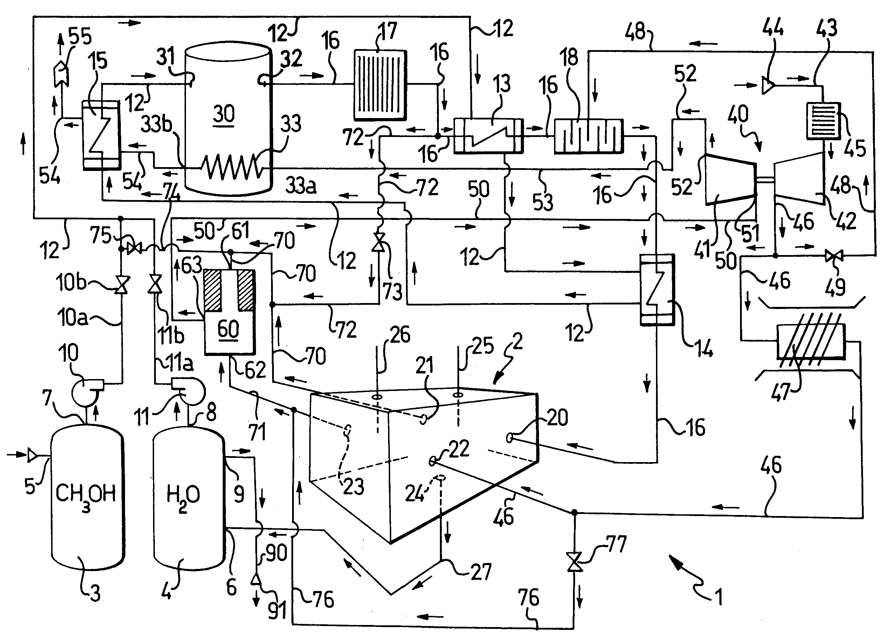

Further characteristics and advantages of the present invention will become clear from the following description of a preferred embodiment thereof given by way of non-limiting example with reference to the appended drawing.

The drawing is a functional diagram of a preferred embodiment of an apparatus for producing hydrogen according to the invention, in which methanol is used.

In the drawing, an apparatus for producing hydrogen according to the invention is indicated 1. It is arranged for the anodic supply of a fuel cell 2 for automotive purposes, preferably of the type with a solid polymeric electrolyte, conventionally known as an SPE.

The fuel cell 2 has an anodic injection section 20, an anodic ejection section 21, a cathodic injection section 22, a cathodic ejection section 23 and an anodic condensation section 24. It also has a negative pole 25 and a positive pole 26.

The apparatus 1 comprises a main tank 3 for lower alkanes or lower alcohols, and a collection tank 4 containing water (H₂O).

In this preferred embodiment, the tank 3 contains methanol (CH₃OH).

The tanks 3, 4 have respective resupply sections 5, 6 and intake sections 7,8. The collection tank 4 also has a overflow section 9 to which a downflow pipe 90 terminating in a downflow nozzle 91 is connected.

The apparatus 1 also comprises a catalytic reactor 30 in which the reaction to produce hydrogen from lower alkanes or lower alcohols takes place, and which has an inlet section 31, an outlet section 32 and an internal heating circuit 33 comprising an inlet end 33a and an outlet end 33b.

Both of the respective metering pumps 10, 11 disposed in the intake sections 7, 8 have their outputs connected to a mixing pipe 12 by means of respective first and second delivery pipes 10a, 11a, with respective first and second control valves 10b and 11b.

The mixing pipe 12 collects a supply mixture comprising lower alkanes or lower alcohols and water and is put into hydraulic communication with the inlet section 31 of the catalytic reactor 30.

In this preferred embodiment, the supply mixture comprises methanol and water.

The mixing pipe 12 also comprises, in succession, first and second pre-heaters indicated 13 and 14, respectively, and a vaporizer 15 in which the methanol-water supply mixture flowing through the mixing pipe 12 is heated, vaporized and superheated.

An anodic injection pipe 16 extending from the outlet section 32 collects a gaseous anodic injection mixture and puts the catalytic reactor 30 into hydraulic communication with the fuel cell 2 by means of its anodic injection section 20.

In the anodic injection pipe 16 there is a hydrogen enrichment device 17 of the type comprising a plurality of ceramic membranes which reduce the concentration of carbon dioxide, and a reactor 18 for converting carbon monoxide, in which the latter reacts with oxygen to form carbon dioxide or with the hydrogen to form water and methane.

The first pre-heater 13, in which the gaseous anodic injection mixture is cooled, yielding some of its heat to the methanol-water supply mixture, is disposed in the anodic injection pipe 16 in a position between the enrichment device 17 and the conversion reactor 18.

The second pre-heater 14 is disposed, with the same function, in a position between the conversion reactor 18 and the anodic injection section 20.

The apparatus 1 for producing hydrogen further comprises a turbo-compressor unit 40 which has a turbine 41 and a compressor 42.

The turbine 41 has a supply manifold 51 and an output section 52 and the compressor 42 has an intake duct 43 having an intake hole 44 through which it takes in air from the atmosphere.

The intake duct 43 has an oxygen enrichment device 45 of the type comprising polymeric membranes.

The output of the compressor 42 is connected to a cathodic injection pipe 46 which is connected to the cathodic injection section 22 of the fuel cell 20.

A radiator 47 in the cathodic injection pipe 46 has the purpose of cooling the air coming from the compressor 42.

A converter pipe 48 branching off the cathodic injection pipe 46 has a third control valve 49 connected to the conversion reactor 18 in order to supply the latter with the oxygen necessary to convert the carbon monoxide.

The converter pipe 48 preferably branches off at a point in the cathodic injection pipe 46 between the compressor 42 and the radiator 47 in order to make use of the high temperature of the air coming out of the compressor 42.

The apparatus 1 for producing hydrogen also comprises a catalytic burner 60 for burning a fuel mixture comprising the cathodic exhaust gases and the anodic exhaust gases of the fuel cell 2.

It has a first supply section 61, a second supply section 62, and a section 63 for discharging the burnt gases produced in the catalytic burner 60.

The first supply section 61 is connected to the anodic ejection section 21 of the fuel cell 2 by means of an anodic ejection pipe 70 and the second supply section 62 is connected to the cathodic ejection section 23 of the fuel cell 2 by means of a cathodic ejection pipe 71.

In a preferred embodiment of the apparatus 1 according to the invention, the anodic ejection pipe 70 is connected to the anodic injection pipe 16 by means of a first supply pipe 72 which has a fourth control valve 73 and to the first delivery pipe 10a by means of a second supply pipe 74 which has a fifth control valve 75.

Similarly, the cathodic ejection pipe 71 is connected to the cathodic injection pipe 46 by means of a third supply pipe 76 which has a sixth regulation valve 77.

The supply manifold 51 of the turbine 41 is connected to the exhaust section 63 of the burner 60 by means of a first exhaust pipe 50 to supply the energy necessary for the operation of the turbo-compressor unit 40.

Moreover, the output section 52 of the turbine 41 is connected hydraulically to the inlet end 33a of the internal heating circuit 33 of the catalytic reactor 30 by means of a second exhaust pipe 53.

As a result, the exhaust section 63 of the catalytic burner 60 is connected to the inlet end 33a of the internal heating circuit 33 of the catalytic reactor 30 by means of the exhaust pipes 50, 53.

A further, third exhaust pipe 54 connected to the outlet end 33b of the internal heating circuit 33 terminates in an exhaust nozzle 55.

Between the outlet end 33b and the exhaust nozzle 55, the third exhaust pipe 54 comprises the vaporizer 15 for supplying the methanol-water supply mixture with sufficient energy to vaporize it before it is admitted to the catalytic reactor 30.

The operation of the apparatus 1 for producing hydrogen according to the invention will be described below with reference to the single drawing and, in particular, to the arrows which indicate the direction of flow of a fluid inside each pipe.

The liquid methanol and water in the main tank 3 and in the collecting tank 4, respectively, are metered by means of the metering pumps 10, 11, by means of which the flow-rates of the two fluids can be set.

Advantageously, they are metered in a manner such that the supply mixture comprises methanol and water in a molar ratio of between 1.2 and 1.5, preferably 1.3.

The two fluids are then mixed inside the mixing pipe 12. The resulting methanol-water supply mixture is heated in the pre-heaters 13, 14 and is vaporized in the vaporizer 15.

At this point, the supply mixture reaches the catalytic reactor 30 through its inlet section 31 and is subjected therein to a chemical reaction which leads to the formation of a gaseous anodic injection mixture comprising hydrogen (H₂), carbon dioxide (CO₂), carbon monoxide (CO) and traces of methane (CH₄) and unreacted water and methanol.

Advantageously, the temperature inside the catalytic reactor 30 is between 240°C and 270°C and the internal pressure is between 500 kPa and 900 kPa, preferably 700 kPa.

The gaseous anodic injection mixture reaches the anodic injection pipe 16 through the outlet section 32 of the catalytic reactor 30 in order to reach the anodic injection section 20 of the fuel cell 2.

As it flows through the anodic injection pipe 16, the gaseous mixture yields considerable excess heat to the pre-heaters 13, 14.

It is also subjected to hydrogen enrichment in the device 17 and to the conversion of the carbon monoxide in the conversion reactor 18.

In the pipe 16, the gaseous mixture undergoes a drop in pressure due to localized and distributed heat losses so that the supply pressure of the fuel cell 2 is between 100 and 300 kPa.

In addition to a gaseous anodic injection mixture, the fuel cell 2 also has to be supplied with air at the cathode 26.

For this purpose, the air is drawn into the intake duct 43 through the intake hole 44 by the action of the compressor 42.

The pressurized air reaches the cathodic injection pipe 46 in which it is suitably cooled by the radiator 47 in order to reach the cathodic injection section 22.

The air is also admitted from the cathodic injection pipe 46 to the converter pipe 48 connected to the conversion reactor 18 to supply the latter with oxygen so that the conversion reaction can take place. The flow-rate of air into the converter pipe 48 is regulated by means of the third control valve 49.

A chemical reaction which takes place in the fuel cell 2 supplied as described at the anode 25 and at the cathode 26 leads to the formation of water from the anodic hydrogen and the cathodic oxygen contained in the air.

The temperature inside the fuel cell 2 is advantageously between 70°C and 90°C.

The water condenses in the region of the anode and is collected in the condensate pipe 27 by means of the electrolyte condensation section 24.

From the pipe 27, the water passes into the collection tank 4 which does not need further supply since the water thus produced exceeds the quantity necessary to supply the catalytic reactor 30.

The overflow section 9 through which the excess water is dispersed is present for this reason.

The exhaust gases which have not reacted in the fuel cell 2 pass through the ejection pipes 70, 71 to supply the catalytic burner 60.

In order to achieve the best possible combustion in the catalytic burner 60, the anodic ejection pipe 70 is supplied by the first supply pipe 72 which supplies the hydrogen-rich anodic injection mixture, and by the second supply pipe 74 which supplies methanol.

Similarly, the cathodic ejection pipe 71 is supplied by the third supply pipe 76 which supplies air.

The flow-rates in the supply pipes 72, 74, 76 are regulated by the fourth, fifth and sixth control valves 73, 75, and 77, respectively.

The burnt gases produced in the catalytic burner 60 reach the first exhaust pipe 50 connected to the turbine 41.

The energy contained in the burnt gases is then partially expended to drive the compressor 42 by means of the turbine 41, supplied by the gases.

From the turbine 41, the burnt gases pass to the second exhaust pipe 53 which supplies the internal heating circuit 33 of the catalytic reactor 30.

A considerable portion of the heat of the burnt gases produced in the catalytic burner 60 is thus used to bring about the reaction in the catalytic reactor 30.

At this point, the burnt gases reach the third exhaust pipe 54 in which the vaporizer 15 is disposed.

A portion of the considerable heat which the burnt gases still possess is thus used to vaporize the methanol-water supply mixture before it is admitted to the catalytic reactor 30.

The burnt gases are then expelled from the exhaust nozzle 55.

Improved operation of the apparatus for producing hydrogen according to the invention is achieved by suitable adjustment of the flow-rates in the supply pipes 72, 74, 76, in the converter pipe 48 and in the delivery pipes 10a, 11a by means of the respective control valves 73, 75, 77, 49, 10b and 11b.

This regulation can be achieved effectively with the use of an automatic control system which uses as regulation parameters the flow-rate of hydrogen, the pressure in the catalytic reactor 30, and the pressure and the flow-rate of air, in addition, of course, to the electrical energy generated by the fuel cell 2.

All of the components described are advantageously constructed with flame-proof criteria.

In addition to the advantage mentioned above, the apparatus for producing hydrogen according to the invention is light and compact and is therefore suitable for use in motor vehicles and small craft.

Moreover, the apparatus, which is easy to fit, has good tolerance to mechanical vibrations which may arise during the aforementioned uses.

Furthermore, the production of toxic agents is minimized and it is only necessary to supply methanol, but not water, which is produced by the fuel cell.

In order to satisfy particular contingent requirements, an expert in the art may apply to the apparatus for producing hydrogen according to the invention many variations all of which, however, are included in the scope of protection of the invention as defined by the following claims.

## Claims

1. Apparatus (1) for producing hydrogen from a supply mixture comprising lower alkanes or lower alcohols in a catalytic reactor (30) for the supply of a fuel cell (2), the catalytic reactor having an internal heating circuit (33), characterized in that it comprises a catalytic burner (60) for burning a fuel mixture comprising the exhausted cathodic gases and the exhausted anodic gases from the fuel cell (2), the catalytic burner (60) having an exhaust section (63) connected to an inlet end (33a) of the internal heating system (33) of the catalytic reactor (30) by means of one or more exhaust pipes (50, 53).

2. Apparatus (1) according to Claim 1, characterized in that the catalytic burner (60) has at least one supply section (61) connected to an anodic ejection section (21) of the fuel cell (2) by means of at least one anodic ejection pipe (70).

3. Apparatus (1) according to Claim 1, characterized in that the catalytic burner (60) has at least one supply section (62) connected to a cathodic ejection section (23) of the fuel cell (2) by means of at least one cathodic ejection pipe (71).

4. Apparatus (1) according to Claim 1, characterized in that it comprises a turbo-compressor unit (40) which has a turbine (41) and a compressor (42), the turbine (41) having a supply manifold (51) connected to the exhaust section (63) of the catalytic burner by means of at least one of the exhaust pipes (50), and the output of the compressor (42) being connected to a cathodic injection pipe (46) of the fuel cell (2).

5. Apparatus according to Claim 1, characterized in that it comprises a further exhaust pipe (54) connected to an output end (33b) of the internal heating circuit (33), which comprises a vaporizer (15) for the supply mixture.

6. Apparatus (1) according to Claim 1, characterized in that the supply mixture comprises methanol and water.

7. Apparatus according to Claim 6, characterized in that the supply mixture comprises methanol and water in a molar ratio of between 1.2 and 1.5.

8. Apparatus according to Claim 7, characterized in that the molar ratio is 1.3.

9. Apparatus (1) according to Claim 6, characterized in that the pressure inside the catalytic reactor (30) is between 500 kPa and 900 kPa.

10. Apparatus (1) according to Claim 9, characterized in that the pressure inside the catalytic reactor (30) is 700 kPa.

11. Apparatus (1) according to Claim 1, characterized in that the fuel cell (2) is of the type with a solid polymeric electrolyte.

12. Apparatus (1) according to Claims 6 and 11, characterized in that the pressure inside the fuel cell is between 100 kPa and 300 kPa.

13. Apparatus (1) according to Claims 6 and 11, characterized in that the temperature inside the cell is between 70°C and 90°C.
